Europäisches Patentamt

European Patent Office

Office européen des brevets

(11) Veröffentlichungsnummer: **0 185 260 B1**

# EUROPÄISCHE PATENTSCHRIFT

(45) Veröffentlichungstag der Patentschrift: **06.05.92**

(51) Int. Cl.5: **G06F 13/28**

(21) Anmeldenummer: **85115465.8**

(22) Anmeldetag: **05.12.85**

(54) **Schnittstelle für direkten Nachrichtenaustausch.**

(30) Priorität: **14.12.84 US 682034**

(43) Veröffentlichungstag der Anmeldung:
**25.06.86 Patentblatt 86/26**

(45) Bekanntmachung des Hinweises auf die
Patenterteilung:
**06.05.92 Patentblatt 92/19**

(84) Benannte Vertragsstaaten:
**BE DE FR GB NL SE**

(56) Entgegenhaltungen:
EP-A- 0 060 388
EP-A- 0 108 415
WO-A-83/01135

ELECTRONICS INTERNATIONAL, vol. 55, no.
20, 6. Oktober 1982, Seiten 101-103, New
York, US; A.B. GOODRICH: "Link-controller IC
combines vesatility and flexibility"

ELECTRONICS INTERNATIONAL, vol. 56, no.
16, August 1983, Seiten 121-125, New York,
US; W. BOENING et al.: "Multichannel DMA
controller transfers 8 megabytes a second"

(73) Patentinhaber: **ALCATEL N.V.**
**Strawinskylaan 537 (World Trade Center)**
**NL-1077 XX Amsterdam(NL)**

(72) Erfinder: **Krishnan, Iyengar Narayanan**
**39 Benjamin Heights Drive**
**Milford, CT 06460(US)**
Erfinder: **Toegel, Herbert Joseph**
**77 Cross Road**
**Middlebury, CT 06762(US)**

(74) Vertreter: **Villinger, Bernhard, Dipl.-Ing. et al**
**Standard Elektrik Lorenz AG Patent- und Li-**
**zenzwesen Postfach 30 09 29**
**W-7000 Stuttgart 30(DE)**

**Beschreibung**

Die Erfindung betrifft eine Schnittstelleneinrichtung zum direkten Austauschen von Nachrichten zwischen einem Zeitmultiplexbus, der mit einem Vermittlungskoppler verbunden ist, und einem Speicher eines Mikrorechners.

Ein bekannter DMA-Steuerbaustein (Electronics International, Vol. 56, No. 16, August 1983, Seiten 121-125, New York, U.S., W. Boening et al: "Multichannel DMA controller transfers 8 megabytes a second") ermöglicht einen Datenaustausch zwischen einem Mikrorechner einerseits und bis zu vier peripheren Einheiten andererseits, die über Datenkanäle angeschlossen sind. Der Steuerbaustein enthält eine zentrale Steuerung zum Zugreifen auf die Kanäle in Abhängigkeit von vorgesehenen Prioritäten. Außerdem ist die zentrale Steuerung über einen internen Bus mit einer Adresseneinheit verbunden, die Zeigeregister (pointer) für Adressen enthält, die entweder angeben, von welcher peripheren Einheit Daten kommen (Source pointer) oder zu weicher peripheren Einheit Daten übertragen werden sollen (Destination pointer). Die zentrale Steuerung ist zum Anpassen an eine Vielzahl unterschiedlicher Mikrorechner über den internen Bus mit einer Mikrorechnerbusschnittstelle verbunden. Ein solcher Steuerbaustein ist speziell zum direkten Datenaustausch mit sehr unterschiedlichen peripheren Einheiten (Geschwindigkeitsanpassung, Prioritätensteuerung) über einzelne Kanäle ausgebildet.

Der direkte Datenaustausch zwischen einem Schreib-/Lesespeicher (RAM) eines ersten Mikrorechners und einem Schreib-/Lesespeicher (RAM) eines zweiten Mikrorechners ist bekannt. Ein solcher Datenaustausch läuft normalerweise im Quittungsbetrieb (handshake) ab.

Der direkte Nachrichtenaustausch, der auch als Direktspeicherzugriff (direct memory access DMA) bezeichnet wird, dient zum schnellen Austauschen einer großen Anzahl von Daten.

Charakteristisch ist jedoch, daß der gerade zugegriffene Mikrorechner solange keine anderen Operationen durchführen kann, wie der zugreifende Mikrorechner Daten austauscht.

In dem normalen DMA-Betrieb muß der Schreib-/Lesespeicher des zugreifenden Mikrorechners direkt, wortgetreu verbunden werden, d. h. ohne Zwischenspeicherung zum Schreib-/Lesespeicher des zugegriffenen Mikrorechners. Somit ist der DMA-Betrieb aufgrund der zusätzlichen Schreib-/Leseschritte nachteilig.

Die technische Aufgabe nach der Erfindung besteht darin, einen direkten Nachrichtenaustausch zwischen einem Vermittlungskoppler einer Einrichtung zum Aufbau von Nachrichtenwege und einem Speicher eines Mikrorechners zu realisieren.

Die Lösung der Aufgabe erfolgt mit den im Patentanspruch 1 angegebenen Mitteln.

Weitere vorteilhafte Ausgestaltungen des Gegenstandes der Erfindung sind den Unteransprüchen zu entnehmen.

Im folgenden wird anhand der Zeichnungen ein Ausführungsbeispiel gemäß der Erfindung erläutert. Es zeigen:

Fig. 1 ein Blockschaltbild, das die erfindungsgemäße Schnittstelleneinrichtung enthält,

Fig. 2 ein Blockschaltbild der Steuereinheit gemäß Fig. 1 und

Fig. 3 ein Zustandsdiagramm der Ablaufsteuerung für einen dritten Nachrichtenaustausch gemäß der Erfindung.

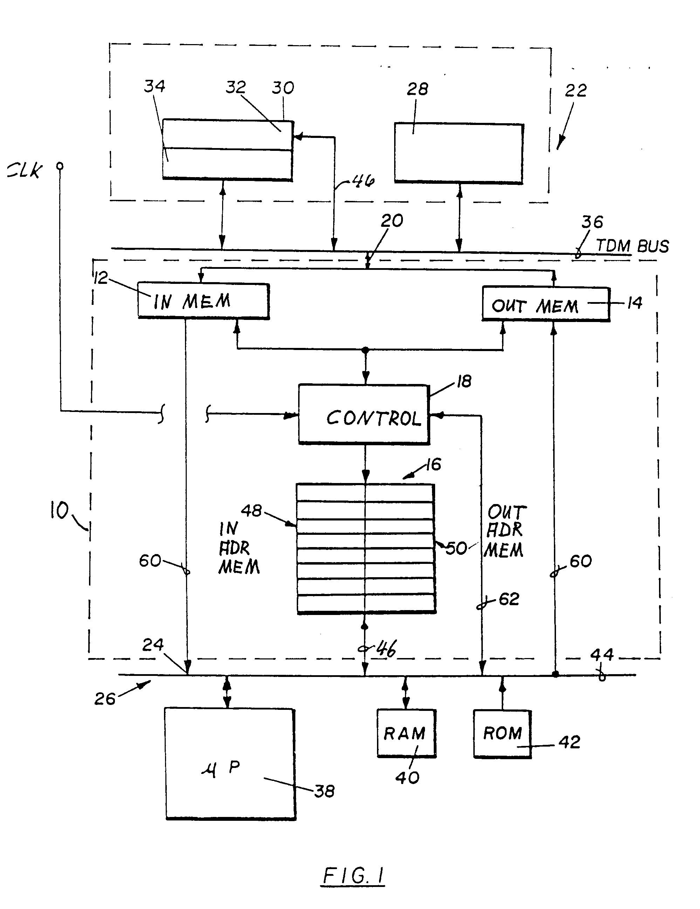

Eine Schnittstelleneinrichtung 10, wie in Figur 1 gezeigt, enthält einen Eingangszwischenspeicher 12, einen Ausgangszwischenspeicher 14, eine Adressenspeichereinheit 16 und eine Steuereinheit 18. Die Schnittstelleneinrichtung 10 - im folgenden Schnittstelle 10 genannt - ist einerseits über ein erstes Tor 20 mit einer Einrichtung 22 zum Aufbau von Nachrichtenwegen und andererseits über ein zweites Tor 24 mit einem Mikrorechner 26 verbunden. Die Einrichtung 22 zum Aufbau von Nachrichtenwegen enthält eine Vielzahl serieller Tore 28 und einen Vermittlungskoppler 30, der einen Speicher 32 und eine Kopplersteuerung 34 aufweist. Die seriellen Tore 28 und der Vermittlungskoppler 30 sind über einen Zeitmultiplexbus 36 untereinander verbunden.

Der Bus 36 weist eine Rahmenstruktur auf, wobei jeder Rahmen in 32 Kanälen mit je 16 Wörtern aufgeteilt ist. Somit ergeben sich 512 Wörter je Rahmen, wobei jedes Wort eine 16-Bit-Nachricht enthält. Die Nachrichtenübermittlung über einen solchen Bus 36 ist bekannt und wird deshalb hier nicht weiter erläutert. Dabei enthält die Einrichtung 22 einen Systemtakt (nicht dargestellt), um entsprechende Freigabesignale den verschiedenen Einheiten zum Anzeigen des entsprechenden Zeitschlitzes mit der für sie bestimmten Nachricht zuzuleiten. Der Vermittlungskoppler 30 kann dynamisch eine Vielzahl von Nachrichtenwegen aufbauen oder durchschalten. Für seinen Speicher 32 wird vorzugsweise ein Notizblockspeicher verwendet. Zusätzlich enthält der Vermittlungskoppler 30 die Kopplersteuerung 34 zum Steuern der Nachrichtenwegezuordnung im Notizblockspeicher 32.

Der Mikrorechner 26 enthält einen Mikroprozessor 38, einen Speicher 40 (RAM) mit wahlfreiem Zugriff und einen Nur-Lesespeicher 42 (ROM), wobei die Speicher 40, 42 über einen internen Bus 44 untereinander und mit dem Mikroprozessor 38 verbunden sind. Der Mikrorechner 26 arbeitet mit einem Quittungssignalbetrieb (handshake), wobei auf den Speicher 40 direkt von einer externen Einheit aus zugegriffen werden kann.

Die Eingangs- und Ausgangszwischenspeicher 12, 14 sind als 16-Bit Register aufgebaut. Somit wird ein 16-Bit-Wort infolge eines Freigabesignals der Steuereinheit 18 in oder aus einem vorgesehenen Wortzeitschlitz auf dem Bus 36 ein- bzw. ausgeblendet. Das entsprechende Festlegen der Wortzeitschlitze wird durch die Einrichtung 22 gesteuert, wobei über ein mit dem Speicher 32 und dem Bus 36 verbundener Speicherverbindungssystem 46 Nachrichten von oder zum Bus übertragen werden.

Die Adressenspeichereinheit 16 ist als ein 256-Bit Schreib-/Lesespeicher (RAM) aufgebaut. Die Adressenspeichereinheit 16 ist in ein Eingangsadressenspeicher 48 und in ein Ausgangsadressenspeicher 50 unterteilt. Dabei kann der Eingangsadressenspeicher 48 bis zu acht verschiedene 16-Bit Adressen enthalten, die je eine unterschiedliche Speicherzelle in dem Speicher 40 des Mikroprozessors 38 angeben. Jede solche Adresse kann einem unterschiedlichen Wortzeitschlitz auf dem Bus 36 zugeordnet sein. Ferner wird jede der acht Adressen durch die Steuereinheit 18 immer dann inkrementiert, wenn ein Nachrichtenteil, das einem bestimmten Wortzeitschlitz zugeordnet ist, von dem Eingangszwischenspeicher 12 zum Speicher 40 übertragen wurde. Somit kann die Schnittstelle 10 Nachrichtenteile von acht verschiedenen Wortzeitschlitzen des Zeitmultiplexbuses 36 empfangen. Ähnlich enthält der Ausgangsadressenspeicher 50 acht verschiedene 16-Bit Adressen, die je eine Speicherzelle des Speichers (RAM) 40 des Mikroprozessors 38 adressieren. Jede Adresse ist einem unterschiedlichen Wortzeitschlitz auf dem Bus 36 zugeordnet. Der Ausgangsadressenspeicher 50 wird durch die Steuereinheit 18 ebenfalls nach jeder Nachrichtenübertragung inkrementiert. Die Schnittstelle 10 kann also gleichzeitig acht ankommende und acht abgehende Nachrichten verarbeiten. Die spezielle Anfangsadresse für jeden Zeitschlitz wird durch den Mikroprozessor 38 erzeugt.

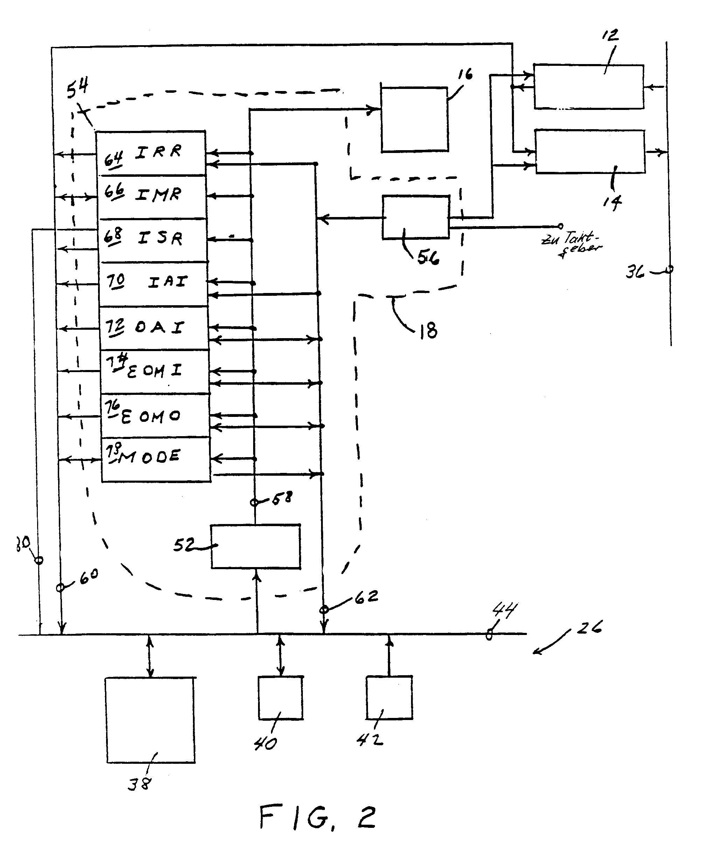

In Fig. 2 ist eine Ausführungsform der Steuereinheit 18 gezeigt, die einen direkten Datenaustausch zwischen dem Speicher 32 der Einrichtung 22 und dem Speicher 40 des Mikrorechners 26 über den Bus 36 und entsprechend eines der Zwischenspeicher 12 oder 14 durchführt.

Die Steuereinheit 18 enthält einen Adressendekodierer 52, eine Vielzahl von Registern 54 und eine Ablaufsteuerung 56. Der Adressendekodierer 52 ist entsprechend den Speichern aufgebaut, um einen direkten Zugriff zu den Registern 54 und den Adressenspeichern 48 und 50 durch den Mikroprozessor 38 zu erlauben. Wie in Fig. 2 dargestellt, ist der Adressendekodierer 52 mit jedem der Register 54 und den Adressenspeichern 48 und 50 über den internen Bus 44 durch den Mikroprozessor 38 zugreifbar. Durch "entsprechend den Speichern aufgebaut" ist zu verstehen, daß der Mikroprozessor 38 über den Speicher (ROM) 42, als Antwort auf ein Freigabesignal der Ablaufsteuerung 56, eine Adresse aus dem Speicher 42 erhält und diese Adresse direkt an den Eingängen des Adressendekodierers 52 anlegt. Der Adressendekodierer 52 verbindet die adressierte Einheit mit dem Mikroprozessor 38, wodurch der Mikroprozessor entsprechend ein Schreib- oder Lesebefehl über einen Datenbus 60 zu dieser Einheit sendet.

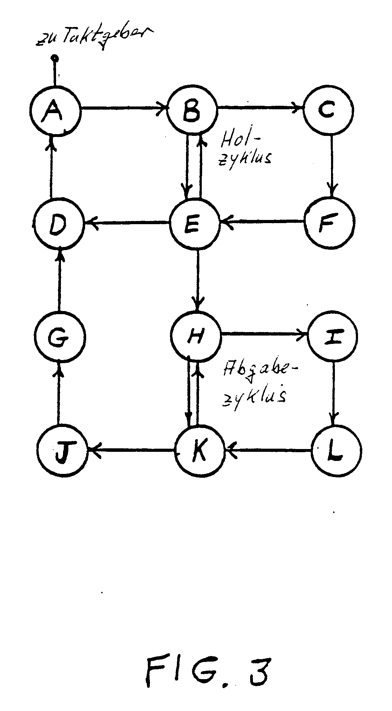

Wie noch im Zusammenhang mit dem Zustandsdiagramm nach Fig. 3 erläutert wird, kann jede Schreib- oder Leseoperation der Schnittstelle 10 als vier verschiedene Schritte vorgestellt werden. Dabei ist jeder Schritt einem Freigabesignal der Ablaufsteuerung 56 zum Mikrorechner 26 über einen Steuerbus 62 zugeordnet.

In der folgenden Beschreibung der Vielzahl von Registern 54 wird unter dem Begriff "Setzen" jeder Wechsel eines logischen Pegels eines Bits in einem Register als Antwort auf ein Ereignis verstanden. Der Begriff "Rücksetzen" bezeichnet das Annehmen eines vorherigen logischen Pegels eines bestimmten Bits das sich als Antwort auf ein Ereignis geändert hatte, d. h. daß die Bits einen Anfangspegel annehmen. Dabei ist es unerheblich, ob der Anfangspegel eine logische Eins oder eine logische Null ist. Außerdem soll mit logisch Eins oder logisch Null kein besonderer Spannungspegel (oder Strom) festgelegt sein.

Die Register 54 enthalten Unterbrechungsregister 64, 66 und 68, Nachrichtenadressenaufwärtszähler 70 und 72, Nachrichtenenderegister 74 und 76 und ein Betriebsartregister 78. Die Unterbrechungsregister teilen sich auf in ein Unterbrechungsanforderungsregister (IRR) 64, Unterbrechungsmaskierungsregister (IMR) 66 und in ein Unterbrechungsausführungsregister (ISR) 68. Die Nachrichtenadressenaufwärtszähler teilen sich auf in ein Eingangsadressenaufwärtszähler (IAI) 70 und in ein Ausgangsadressenaufwärtszähler (OAI) 72. Die Nachrichtenenderegister teilen sich auf in ein Register (EOMI) 74 für das Nachrichtenende einer Eingangsnachricht und in ein Register (EOMO) 76 für das Nachrichtenende einer Ausgangsnachricht.

Das Unterbrechungsanforderungsregister 64 ist ein 8-Bit Register, das nur von dem Mikroprozessor 38 gelesen werden kann und das u. a. Bits enthält, die dann gesetzt werden, wenn ein Nachrichtenende im Register (EOMI) 74 oder im Register (EOMO) 76 abgelegt wird. Diese Bits werden dann zurückgesetzt, wenn die beiden Register 74 oder 76 zurückgesetzt werden. Somit wird der Mikroprozessor 38 dann unterbrochen, wenn eine komplette Nachricht angekommen ist oder abgegeben wurde. Zusätzlich zu diesen Bits können im Unterbrechungsanforderungsregister 64 weitere Bits gesetzt werden, um den Mikrorechner 26 auf andere Systembedingungen wie Fehler, Alarme u. ä. aufmerksam zu machen.

Das Unterbrechungsmaskierungsregister 66 ist ein 8-Bit Register, das ausgelesen und beschrieben wird durch den Mikrorechner 26. Wenn in diesem Register 66 ein Bit gesetzt wird, wird das Setzen eines Bits im Unterbrechungsanforderungsregister 64 zum Senden eines Unterbrechungssignales an den Mikrorechner 26 verhindert. Wenn der Mikrorechner 28 ein Programm mit Priorität abarbeitet, kann eine Prioritätsregelung durch das Setzen eines Bits im Unterbrechungsmaskierungsregister 66 erfolgen, um sicherzustellen, daß eine Aufgabe mit niederer Priorität nicht gerade ein laufendes Programm mit höherer Priorität stört.

Das Unterbrechungsausführungsregister 68 ist ein 8-Bit Nur-Leseregister, das wenn dort ein Bit gesetzt wird, ein Unterbrechungssignal über eine Unterbrechungsleitung 80 zum internen Bus 44 und somit zum Mikrorechner 26 sendet. Ein Bit im Unterbrechungsausführungsregister 68 wird als Antwort auf eine logische UND-Verknüpfung des entsprechenden Bit im Unterbrechungsanforderungsregister 64 und dem invertierten Bit im Unterbrechungsmaskierungsregister 66 gesetzt.

Der Eingangsadressenaufwärtszähler 70 ist ein 8-Bit Nur-Leseregister, das immer dann inkrementiert wird, wenn eine Nachricht aus dem Eingangszwischenspeicher 12 in den Speicher (RAM) 40 geschrieben wurde. Wenn nun im Eingangszwischenspeicher 48 acht Eingangsadressen gespeichert sind, stellt die Adresse im Eingangsadressenaufwärtszähler 70 die nächste Adresse dar, in der der nächste Nachrichtenteil eines Zeitwortschlitzes abzuspeichern ist. Diese Adresse wird, nach dem sie inkrementiert wurde, zum Eingangsadressenspeicher 48 zurückgeführt, um für das nächste Nachrichtenteil des gleichen Zeitwortschlitzes benutzt werden zu können.

Der Ausgangsadressenaufwärtszähler 72 ist ein 8-Bit Nur-Leseregister, das entsprechend die Adressen im Ausgangsadressenspeicher 48 behandelt. Es aktualisiert kontinuierlich die Adressen des nächsten Nachrichtenteils eines Zeitschlitzes des Buses 36, zu dem ein im Speicher 40 abgespeichertes Nachrichtenteil gesendet werden soll.

Das Nachrichtenenderegister 74 für die ankommenden Nachrichten ist ein 8-Bit Nur-Leseregister. Jedes Bit des Registers 74 ist einem einzelnen Wortzeitschlitz des Buses 36 zugeordnet. Wenn ein Nachrichtenendebit in den Eingangszwischenspeicher 12 eingelesen wird, setzt die Ablaufsteuerung 56 das dem entsprechenden Wortzeitschlitz, von dem das Nachrichtenendebit kommt, zugeordnete Bit im Nachrichtenenderegister 74. Das zugeordnete Bit im Unterbrechungsanforderungsregister 64 wird gesetzt und es wird keine weitere Nachricht durch den Eingangszwischenspeicher 12 für diesen Wortzeitschlitz empfangen. Das Unterbrechungsanforderungsregister 64 und das Nachrichtenenderegister 74 werden durch den Mikroprozessor 38 als Antwort auf eine neue Startadresse zum Eingangsadressenspeicher 48 für diesen Wortzeitschlitz zurückgesetzt.

Entsprechend ist das Nachrichtenenderegister 76 für eine abgehende Nachricht als 8-Bit Nur-Leseregister aufgebaut, wobei jedes Bit einem einzelnen Wortzeitschlitz des Buses 36 zugeordnet ist. Diese Bits und die entsprechenden Bits im Unterbrechungsanforderungsregister 64 werden entsprechend dem zuvor zum Nachrichtenendespeicher 74 für eine ankommende Nachricht Gesagtem gesetzt und zurückgesetzt. Natürlich erfolgt eine Zurücksetzung aufgrund einer neuen Adresse im Ausgangsadressenspeicher 50.

Das Betriebsartregister (MODE) 78 ist vorgesehen, um die Schnittstelle 10 in Verbindung mit einer anderen Schnittstelle, z. B. einer Datenzwischenspeicherschnittstelle zu kombinieren. Dazu wird dieses Register 78 entsprechend der gewünschten Betriebsart gesetzt.

Die Ablaufsteuerung 56 ist als sequentielle Steuerung aufgebaut, deren Folgezustand vom momentanen aktuellen Zustand und den aktuellen Eingangszuständen abhängt. Eine solche sequentielle Steuerung kann durch sogenannte programmierbare logische Anordnungen PLA oder durch programmierbare Nur-Lesespeicher PROM aufgebaut werden.

Vorzugsweise wird die Schnittstelle 10 mit Hilfe der LSI-Technik (large scale integration) realisiert und zwar gemäß dem in Figur 3 dargestellten Zustandsdiagramm. Ein Zustandsübergang erfolgt gemäß einem Takt eines externen Taktgebers, der hier nicht näher dargestellt ist. Normalerweise erfolgt eine Synchronisation mit dem Systemtakt.

In Figur 3 sind die Zustände der Ablaufsteuerung 56 mit den Buchstaben A bis L gekennzeichnet.

Der Zustand A ist ein Ruhezustand, welcher anzeigt, daß die Schnittstelle 10 zum Nachrichtenaustausch mit dem Bus 36 bereit ist. Mit dem Takt geht die Ablaufsteuerung 56 in den Zustand B über, woraufhin die Adresse des nächsten Nachrichtenteils eines vorgegebenen Wortzeitschlitzes zum Mikroprozessor 38 gelangt. Im Zustand C wird die Adresse durch den Mikroprozessor 38 gesichert, so daß im Zustand F das Nachrichtensegment direkt von dem Speicher 40 zum Ausgangszwischenspeicher 14 übertragen wird. Im Zustand E wird das Nachrichtensegment im Ausgangszwischenspeicher 14 in den entsprechenden Wortzeitschlitz des Busses 36 eingeblendet.

Mit dem nächsten Takt, falls kein ankommendes Nachrichtenteil vorliegt, werden während des Zustandes D die Register 54 aktualisiert, z. B. der Ausgangsadressenaufwärtszähler 72 und das Nachrichtenenderegister 76, falls die ausgegebene Nachricht das Nachrichtenende war. Wenn jedoch ein ankommendes Nachrichtenteil in dem als nächster adressierten Wortzeitschlitz vorliegt, geht die Ablaufsteuerung 56 in den Zustand H über. Hier erhält der Mikroprozessor 38 die zugeordnete Adresse und im Zustand I wird diese Adresse in den Speicher 40 eingelesen.

Während den Zuständen L und K wird das Nachrichtenteil in den Eingangszwischenspeicher 12 und dann während K direkt in den Speicher 40 eingeschrieben. Im nächsten Zustand, dem Zustand J, werden die Register 54 aktualisiert. Der folgende Zustandsübergang in den Zustand G ist effektiv ein Nulloperationszustand, der jedoch zum Synchronisieren der Ablaufsteuerung 56 mit dem Takt genutzt wird.

Die Ablaufsteuerung 56 kann im Zustand E während eines Nachrichtenholzyklus oder im Zustand K während eines Nachrichtenabgabezyklus in die Zustände B bzw. H übergehen. Dadurch wird der Schnittstelle 10 der Einsatz eines 16-Bit Mikrorechners 26 in einem 8-Bit System ermöglicht. In einem solchen 8-Bit System ist es wünschenswert zwei 8-Bit Wörter gleichzeitig lesen oder schreiben zu können.

Die hier beschriebene Schnittstelle 10 ermöglicht einen Direktnachrichtenaustausch mit allen daraus resultierenden Vorteilen ohne die charakteristischen Nachteile aufzuweisen.

**Patentansprüche**

1. Schnittstelleneinrichtung (10) zum direkten Austauschen von Nachrichten zwischen einerseits einem über ein erstes Tor (20) angeschlossenen Zeitmultiplexbus (36), der zum Aufbauen und Durchschalten von Nachrichtenwegen mit einem Vermittlungskoppler (30) verbunden ist, und andererseits einem über ein zweites Tor (24) angeschlossenen Speicher (40) eines Mikrorechners (26), wobei die Schnittstelleneinrichtung (10) eine mit einer Adressenspeichereinheit (16), einem Eingangszwischenspeicher (12) und einem Ausgangszwischenspeicher (14) verbundene Steuereinheit (18) enthält, wobei der Eingangszwischenspeicher (12) und der Ausgangszwischenspeicher (14) über das erste Tor (20) mit dem Zeitmultiplexbus (36) und über das zweite Tor (24) an einen den Speicher (40) und einen Mikroprozessor (38) des Mikrorechners (26) verbindenden internen Bus (44) angeschlossen sind und wobei die Adressenspeichereinheit (16) einen Eingangsadressenspeicher (48) und einen Ausgangsadressenspeicher (50) enthält, dessen Adressen einerseits Zeitschlitzen des Zeitmultiplexbusses (36) und andererseits Speicherplätzen des Speichers (40) zuordenbar sind, um gesteuert durch die Steuereinheit (18) einerseits über den Eingangszwischenspeicher (12) oder den Ausgangszwischenspeicher (14) mit dem Zeitmultiplexbus (36) und andererseits mit dem Speicher (40) des Mikrorechners (26) Nachrichten auszutauschen.

2. Schnittstelleneinrichtung (10) nach Anspruch 1, wobei die Steuereinheit (18) einen Eingangsadressenaufwärtszähler (70) und einen Ausgangsadressenaufwärtszähler (72) enthält, die die Adressen in den Eingangsadressenspeicher (48) bzw. in den Ausgangsadressenspeicher (50) der über den Eingangszwischenspeicher (12) bzw. den Ausgangszwischenspeicher (14) ankommenden bzw. abgehenden Nachrichtenteile einer Nachricht inkrementieren, so daß für jedes Nachrichtenteil eine unterschiedliche Adresse an den Speicher (40) des Mikrorechners (26) zum Einschreiben bzw. zum Auslesen angelegt wird.

3. Schnittstelleneinrichtung (10) nach Anspruch 1 oder 2, wobei die Steuereinheit (18) ein Nachrichenenderegister (74) für die über das erste Tor (20) ankommenden Nachrichten und ein Nachrichtenenderegister (76) für die über das zweite Tor abgehenden Nachrichten enthält, die mit einem Unterbrechungsanforderungsregister (64) verbunden sind.

4. Schnittstelleneinrichtung (10) nach Anspruch 3, wobei das Unterbrechungsanforderungsregister (64) wenigstens ein erstes Bit und ein zweites Bit enthält, die beim Erkennen eines Nachrichtenendes im Nachrichtenenderegister (74) für die ankommenden Nachrichten bzw. im Nachrichtenenderegister (76) für die abgehenden Nachrichten auf einen entsprechenden logischen Pegel gesetzt werden.

5. Schnittstelleneinrichtung (10) nach Anspruch 4, wobei in der Steuereinheit (18) das Unterbrechungsanforderungsregister (64) und ein Unterbrechungsmaskierungsregister (66) über ein logisches UND-Gatter mit einem Unterbrechungsausführungsregister (68) verbunden sind und wobei bei einem im Unterbrechungsanforderungsregister (64) gesetzten Bit und bei einem im Unterbrechungsmaskierungsregister (66) entsprechenden invers gesetzten Bit das Unterbrechungsausführungsregister (68) über das logische UND-Gatter so gesetzt wird, daß dieses über eine Unterbrechungsleitung (80) ein Unterbrechungssignal auf den internen Bus (44) zum Mikroprozessor (38) des Mikrorechners (26) sendet.

6.  Schnittstelleneinrichtung (10) nach einem der vorhergehenden Ansprüche, wobei die Steuereinheit (18) eine Ablaufsteuerung (56) enthält, die als sequentielle Steuerung aufgebaut ist und die in Abhängigkeit eines zugeführten Taktes den Nachrichtenaustausch steuert.

## Claims

1.  An interface device (10) for effecting direct data transfer between, on the one hand, a time-division multiplexed bus (36), connected to the interface device (10) via a first port (20) and to a switch (30) for establishing and completing communication paths, and, on the other hand, a memory (40) of a microcomputer (26), which memory (40) is connected to the interface device (10) via a second port (24), the interface device (10) comprising a controller (18) connected to an address storage unit (16), an input buffer (12), and an output buffer (14), with the input buffer (12) and the output buffer (14) connected via the first port (20) to the time-division-multiplexed bus (36) and via the second port (24) to an internal bus (44) interconnecting the memory (40) and a microprocessor (38) of the microcomputer (26), and with the address storage unit (16) including an input address storage (48) and an output address storage (50) whose addresses are assignable, on the one hand, to time slots of the time-division-multiplexed bus (36) and, on the other hand, to locations of the memory (40) in order to effect data transfer between, on the one hand, the time-division-multiplexed bus (36) and, on the other hand, the memory (40) via the input buffer (12) or the output buffer (14) under control of the controller (18).

2.  An interface device (10) as claimed in claim 1 wherein the controller (18) includes an input address incrementer (70) and an output address incrementer (72) which increment the addresses in the input address storage (48) and the output address storage (50), respectively, of the segments of a message arriving via the input buffer (12) and outgoing via the output buffer (14), respectively, so that for each message segment, a different address is presented to the memory (40) of the microcomputer (26) for writing and reading.

3.  An interface device (10) as claimed in claim 1 or 2 wherein the controller (18) includes an end-of-message register (74) for the messages incoming via the first port (20), and an end-of-message register (76) for the messages outgoing via the second port which are connected to an interrupt request register (64).

4.  An interface device (10) as claimed in claim 3, wherein the interrupt request register (64) contains at least a first bit and a second bit which, when any end-of-message signal is recorded in the end-of-message register (74) for the incoming messages and in the end-of-message register (76) for the outgoing messages, respectively, are set to a corresponding logic level.

5.  An interface device (10) as claimed in claim 4 wherein in the controller (18) the interrupt request register (64) and an interrupt mask register (66) are connected via a logic AND gate to an interrupt service register (68), and wherein with a bit set in the interrupt request register (64) and with a bit set inversely in the interrupt mask register (66), the interrupt service register (68) is set via the logic AND gate so as to send an interrupt signal over an interrupt line (80) to the internal bus (44) to the microprocessor (38) of the microcomputer (26).

6.  An interface device (10) as claimed in any one of the preceding claims wherein the controller (18) includes a sequencer (56) which controls the data transfer in accordance with an applied clock signal.

## Revendications

1.  Dispositif d'interface (10) destiné à l'échange direct d'informations entre d'une part un bus multiplex à temps partagé (36) qui est raccordé via une première porte (20) et qui est relié à un coupleur d'interconnexion (30) en vue d'établir et de connecter entre elles des voies de cheminement d'informations, et d'autre part une mémoire (40) d'un micro-ordinateur (26), mémoire raccordée via une seconde porte (24), le dispositif d'interface (10) renfermant une unité (16) de mémoire d'adresses, une mémoire tampon (12) d'entrée et une unité de commande (18) reliée à une mémoire tampon (14) de sortie, la mémoire tampon (12) d'entrée et la mémoire tampon (14) de sortie étant raccordées via la première porte (20) avec le bus (36) multiplex à temps partagé et via la seconde porte (24) à un bus interne (44) reliant la mémoire (40) et un microprocesseur (38) du micro-ordinateur (26), et l'unité (16) de mémoire d'adresses renfermant une mémoire (48) d'adresses d'entrée et une mémoire (50) d'adresses de sortie, dont les adresses peuvent être affectées d'une part à des intervalles de temps d'un bus multiplex à temps partagé (36) et d'autre part à des cases de mémoire de la mémoire (40), en vue d'échanger des informations sous la commande de l'unité de commande (18), d'une part via la mémoire tampon (12) d'entrée ou via la mémoire tampon (14) de sortie, avec le bus (36) multiplex à temps partagé, et d'autre part avec la mémoire (40) du micro-ordinateur (26).

2. Dispositif d'interface (10) selon la revendication 1, dans lequel l'unité de commande (18) renferme un compteur progressif (70) d'adresses d'entrée et un compteur progressif (72) d'adresses de sortie, qui incrémentent, dans la mémoire (48) d'adresses d'entrée ou dans la mémoire (50) d'adresses de sortie, les adresses des parties d'informations d'une information arrivant ou partant vers une mémoire tampon (12) d'entrée ou une mémoire tampon (14) de sortie, de façon telle que pour chaque information partielle une adresse différente est appliquée à la mémoire (40) du micro-ordinateur (26) pour l'enregistrement ou pour la lecture.

3. Dispositif d'interface (10) selon la revendication 1 ou 2, dans lequel l'unité de commande (18) renferme un registre (74) de fin d'informations destiné aux informations arrivant via la première porte (20) et un registre (76) de fin d'information destiné aux informations sortant via la deuxième porte, lesquelles sont reliées à un registre (64) de demande d'interruption.

4. Dispositif d'interface (10) selon la revendication 3, dans lequel le registre (64) de demande d'interruption renferme au moins un premier et un deuxième bits qui sont mis à un niveau logique correspondant lors de l'identification de la fin d'une information dans le registre (74) de fin d'information (pour les nouvelles qui arrivent) ou de la fin d'une information dans le registre (76) de fin d'informations (pour les nouvelles qui sortent).

5. Dispositif d'interface (10) selon la revendication 4, dans lequel le registre (64) de demande d'interruption et un registre (66) de masquage d'interruption sont reliés dans l'unité de commande (18) par un circuit logique ET à un registre (68) d'exécution d'interruption et dans lequel, en cas d'un bit positionné dans le registre (64) de demande d'interruption et d'un bit positionné en correspondance de façon inverse dans le registre (66) de masquage d'interruption, le registre (68) d'exécution d'interruption est positionné via le circuit logique ET de façon telle que celui-ci envoie, via un conducteur d'interruption, un signal d'arrêt sur le bus interne (44) vers le microprocesseur (38) du micro-ordinateur (26).

6. Dispositif d'interface (10) selon l'une quelconque des revendications précédentes, dans lequel l'unité de commande (18) renferme une commande à séquences (56) qui a une structure de commande se succédant et qui commande l'échange d'informations selon une cadence qui a été introduite.

_FIG. 1_

FIG. 2

FIG. 3